# EUROPEAN PATENT APPLICATION

(11) **EP 2 594 836 A1**
(43) Date of publication of application: **22.05.2013**
(21) Application number: 13154569.1
(22) Date of filing: 26.09.2008
(51) Int. Cl.: F16L 47/03, F16L 47/34

(54) **Purge tee assembly**

(30) Priority: 11.10.2007 GB 0719878
(62) Divisional of application: 08806686.5
(71) Applicant: Radius Systems Limited, Alfreton, Derbyshire DE55 2JJ (GB)
(72) Inventor: Muckle, Derek, Long Whatton, Leicestershire LE12 5DN (GB)
(74) Representative: Stainthorpe, Vanessa Juliet

(57) **Abstract**

A purge tee assembly (10) for purging a plastics pipeline (50) comprises a saddle (18), provided with a saddle-shaped saddle electrofusion element (24), a hollow body (12), integral with the saddle and provided with an axial bore (26) and an externally screw threaded end (30) distal to the saddle. The externally threaded receives a first screw cap (34). There is provided a cutter (28) disposed within the axial bore. A tubular spigot (22), which is integral with the hollow body, has a spigot bore (22a) in fluid connection with the axial bore of the body. The purge tee assembly is characterised in that the spigot is in connection with a tubular elbow (14), having a distal outlet in the form of an adaptor (16). The adaptor (16) is screw threaded to receive a second screw cap (40), as well as a vent pipe (52) and other ancillary apparatus.

## Description

This invention relates to a purge tee assembly, and more particularly to a purge tee assembly for use in the commissioning and decommissioning of mains gas pipes, particularly plastics pipes.

### BACKGROUND

When commissioning/decommissioning a mains pipe, it is the aim of the engineer to prevent the mixing of air and natural gas. Presently, in the field, engineers make use of existing tapping assemblies to purge pipes. However this approach can lead to inconsistencies and may at times be unreliable or unsafe. Indeed, there do not seem to be any established procedures for purging a mains pipe, either of gas with fresh air when it is required to work on the pipe, or of air with gas when work is complete and the pipe is to be put into service again. One known procedure involves the cobbling together of a tapping tee on the mains pipe with a length of plastics pipe to which a vent pipe (usually of metal) is connected and supported in an upstanding position. When the arrangement is complete, the plastics pipe is squeezed with a pinch-off clamp to seal the end. When ready, the pipe is purged by opening the pinch clamp. Once the pipe is purged, the pinch clamp is closed again and the vent is removed leaving a free end of plastics pipe beyond the pinch clamp. This is then sealed by an end cap, usually electro-fused to the end and the clamp removed. However, this leaves a length of live, but useless, pipe in the trench and poses an unnecessary risk. Gas leaks are desirably avoided at all times, but releases to the atmosphere of small amounts of gas are not detrimental, provided no ignition source is near at hand. Because the existing method employs an electrofused end-cap seal as the final stage of the venting process, the pinch clamp must be 100% effective. There are two reasons for this. The first is purely in relation to the ignition danger presented by an external heat source employed during electrofusion of the end cap. The second is the possibility of gas pressure building up against the end cap before the electrofusion is complete, with the possibility of a leak through a pinch clamp also penetrating the electrofused region of the end cap.

It is an object of the present invention therefore, to provide engineers in the field with a safe, reliable and efficient means to purge mains pipes.

A tapping tee is a fitting that can be mounted on a pipeline. Typically, tapping tees comprise a body with a through bore, a saddle that contours the main pipe, and a spigot through which a branch pipe can be connected. The spigot has a spigot bore connecting the body bore to branch pipe. The saddle contains an electrofusion element (or other components incorporating an electrofusion element such as an electrofusion element mat), that is embedded in fusible polymer material to facilitate the bonding of the tapping tee to the mains pipe. Pipe assemblies provided with saddles and saddle-shaped electrofusion elements and mats are disclosed in US patents 4933037, 4806181 , 5104468, 5601315, and 5348045, and in UK patent application GB2310264. The entire disclosures of these patents are incorporated herein by reference for all purposes.

In some tapping tees an integral cutter is disposed in the body, and is arranged to be driven through the body of the fitting in order to cut a hole in the mains pipeline through the saddle after the saddle has been fixed on the mains pipe and after the branch line has been completed and fitted to the tapping tee spigot. Indeed, such an arrangement can be used with the mains pipe live, since the cutter with the coupon of pipe cut from the mains pipe forms a seal in the body until the cutter is withdrawn past the branch into the spigot. Thereupon, a winding tool, used to advance and withdraw the cutter (which is, in this event, threaded and engaged with a corresponding thread of the body bore) is removed and a cap fitted on the top of the body to seal the tapping tee. For this purpose, the outside of the tapping tee body near its opening is also threaded to receive the correspondingly threaded cap, which may be provided with an elastomeric seal to form a permanent seal. Any leakage past the cutter/coupon combination is small and non-consequential, soon stopped altogether by the mechanical attachment of the cap.

### BRIEF SUMMARY OF THE DISCLOSURE

The invention is defined in the appended claims. In accordance with the present invention there is provided a purge tee assembly for purging a plastics mains pipeline comprising:
a saddle, provided with a saddle-shaped saddle electrofusion element ;
a hollow body, integral with the saddle and provided with an axial bore and an externally screw threaded end distal to said saddle, said externally threaded end to receive a first screw cap;
a cutter disposed within said axial bore and advancable and withdrawable therein to cut a hole in the mains pipe when the saddle is fitted thereto;
a tubular spigot, which is integral with the hollow body and has a spigot bore in fluid connection with the axial bore of the body;
**characterised in that**
said spigot comprises an externally screw threaded distal outlet and a second screw cap.

Preferably, between said spigot and distal outlet is a tubular elbow to turn said outlet substantially parallel said axial body. Without an elbow, the arrangement could be employed where the tapping tee is connected to the mains pipeline in a horizontal attitude, whereby the spigot would extend vertically upwardly, which would then permit a vent pipe to be connected directly.

In one arrangement said purge tee assembly may comprise a conventional tapping tee comprising said saddle, body and spigot, a conventional elbow fitting having one outlet fused on said spigot and a cap adaptor fitted in the other outlet of the elbow, said cap adaptor comprising said distal outlet and a plain pipe section to be received in said other outlet of the elbow.

While manufacturing such a device might be problematic, there is no reason why the elbow needs to be a separate component and could otherwise be integral with the remainder of the purge tee.

Preferably, said cutter and said axial bore are screw threaded in a complementary fashion thus allowing controlled translation of said cutter within said bore. Said cutter preferably comprises a polygonal socket for engagement with a complementary tool. Preferable complementary tools include a winding tool and a top loading clamp.

Said body and said distal outlet preferably also comprise elastomeric O-rings to enhance the seal made by said first and second screw caps, or said vent pipe or other ancillary apparatus.

To facilitate efficient and safe purging, said vent pipe preferably extends at least one metre vertically above said plastics pipeline when attached thereto.

In one preferable embodiment, said saddle, body and spigot are integrally moulded. In another preferable embodiment, said elbow is integrally moulded to said spigot.
Integrally moulded assemblies comprise one single air-tight component and thus avoid potential problems with leaking seals and joins.

Preferably, said vent pipe is metallic and is preferably composed of aluminium or steel.

In use, when a mains pipe is ready to be purged, the purge tee is fused to the mains pipe at an appropriately extreme end of mains pipe. Such a process is conventional and needs no further explanation here. The distal outlet is suitably connected to a vent pipe, for example by screwing a pipe to the distal outlet. A winding tool is engaged with the cutter, which is then advanced to cut a hole in the wall of the mains pipe. The cutter and coupon between them still seal the axial bore. When the cutter is withdrawn past the spigot bore, gas, or air, in the mains pipe can escape. The purge tee can then allow the safe commissioning of the mains gas pipe from air to natural gas, or decommissioning from natural gas to air, by allowing fluid from the main pipeline to be safely vented when the cutter is removed.

When fully purged, the winding tool is re-advanced to re-engage the cutter with the hole in the mains pipe, thereby closing off the spigot bore and resealing the mains pipe (albeit temporarily and possibly even with some non-consequential leakage). The winding tool is then removed and so also is the vent pipe, and caps are fitted on the threaded ends of both the axial bore and the distal outlet, permanently sealing the purge tee. The purge tee remains on the mains pipe and may serve on future occasions to purge the pipeline, because the cutter and coupon remain in place and can be employed again as temporary valve members. Moreover, the purge tee is now the minimum "unnecessary" appendage of the mains pipe and represents less of a risk of accidental damage in the event of subsequent excavation in the vicinity of the pipeline.

Furthermore, the final seal of the arrangement is provided by the screw caps. There is no requirement therefore for any heat source. Consequently, there is no reason why a small leakage should be problematic. Firstly, screwing the cap shut makes a complete seal, which is not compromised by a small leak past the cutter and its coupon.

Secondly, since no heat is employed there is no danger of ignition. Preferably, the screw cap is also made from plastics material, whereby the risk of a spark hazard is nonexistent.

Thus, in another aspect, the present invention provides a method of purging fluid in a plastics pipeline, using a purge tee assembly as defined above, said method comprising the steps:
i) electro-fusing said purge tee assembly to said plastics pipeline;
ii) fitting a vent pipe to said distal outlet;
iii) translating said cutter down said axial bore and cutting a hole in said plastics pipeline;
iv) translating said cutter upward through said axial bore such that said spigot bore is in fluid connection with said plastics pipeline;
v) venting unwanted fluid from said plastics pipeline;
vi) translating said cutter down said axial bore such that said cutter is disposed in said hole to temporarily, at least partially, close fluid connection between said pipeline and spigot bore;
vii) removing said vent pipe; and
viii) sealing said purge tee assembly by screwing said first and second screw caps onto said externally threaded end of said hollow body and said outlet respectively.

Preferably, said plastics pipeline is scraped to remove nominally 0.2 to 0.4 mm of its surface prior to executing step i). Scraping removes surface dirt and oxide layers that may reduce the quality of the electrofusion weld. For the same reason, it is further preferable to maintain a high level of cleanliness at the worksite when electrofusing.

Preferably, said cutter is translated along said axial bore by rotation of said winding tool when engaged with said socket.

Preferably, said method further comprises the steps of testing the integrity of the purge tee assembly and its air-tightness prior to step ii). Seals may be tested by a variety of means including pressure testing. Such practice minimises the risk of potentially harmful fluids escaping from faulty seals of the assembly.

To ensure that said purge tee assembly is squarely fitted to said plastics pipeline and that said assembly does not move during electrofusion, said assembly is preferably secured to said plastics pipeline by a clamp tool during step i). Preferably, said clamp tool engages with said socket and applies a downward force to said purge tee assembly for the duration of step i). In this preferable arrangement, said clamp tool has a secure connection to said purge tee assembly and will be inclined to prevent undesirable lateral movement of the purge tee assembly during clamping, thus ensuring a better electrofusion weld.

### BRIEF DESCRIPTION OF THE DRAWINGS

Embodiments of the invention are further described hereinafter with reference to the accompanying drawings, in which:
Figure 1 is an exploded sectional side view of purge tee assembly in accordance with the present invention (excluding vent pipe);
Figure 2 is a perspective view of an electrofusion element mat; and
Figures 3a to d are a schematic sequence illustrating a purging procedure in accordance with the present invention.

### DETAILED DESCRIPTION

The purge tee assembly of the present invention may be an integral structure comprising several individual components or may comprise one single integrally-moulded structure.

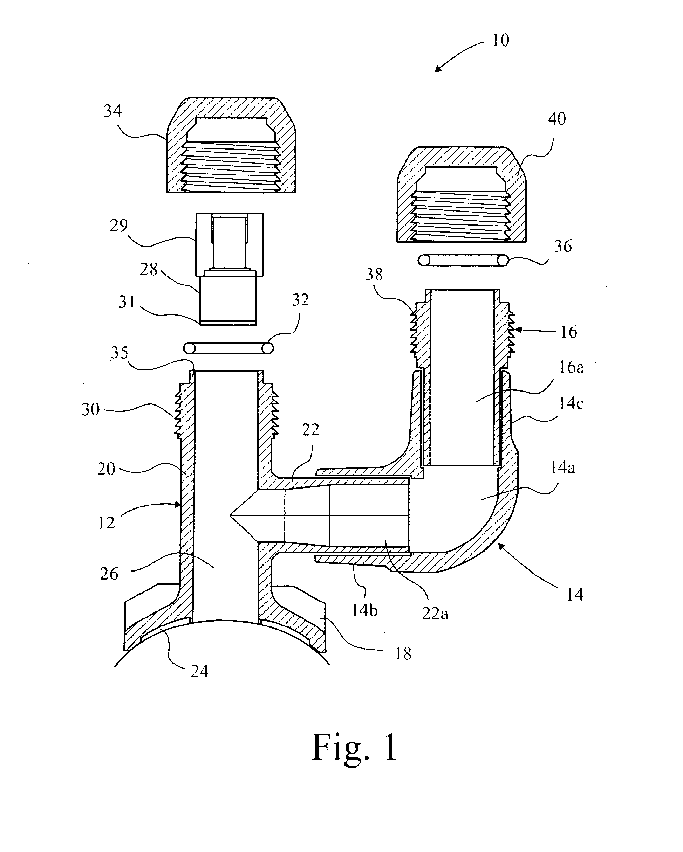

In one embodiment, depicted in Figure 1, the purge tee assembly 10 comprises a standard tapping tee 12 connected to an adaptor 16 via an intermediate elbow 14. The elbow 14 may be a standard electrofusion fitting, but may be connected to the adaptor 16 and tapping tee 12 in a factory setting, rather than in the field, whereby the efficacy of the joints between them can be more reliably ensured. However, this is by no means essential and the invention certainly includes the prospect of assembling the purge tee assembly 10 from its components immediately prior to its use. Indeed, in this respect, the only unique component that an operative needs to have is the adaptor 16, described further below.

The tapping tee 12 comprises an integrally moulded saddle 18, body 20 and spigot 22. Although the spigot is a male fitting corresponding with the normal pipe, there is no reason why it should not comprise a socket. In that event, a short length of pipe may be required to connect the elbow to the tapping tee. The saddle 18 is provided with a saddle-shaped electrofusion element mat 24 (described further below), which is attached thereto by over-moulding, snap-fit, screws or other fastening means (not shown). The body 20 has an axially extended screw threaded bore 26, and a metal cutter 28 disposed within the bore. The cutter 28 has a screw threaded outer surface 29 that cooperates with the screw thread of the bore, and a circular cutting edge 31 . The top of the body 20 has an O-ring 32 and an external screw thread 30 to receive a first screw cap 34, whereby a tight seal of the open end 35 of the axial bore 26 may be assured.

The spigot 22 is hollow and has a spigot bore 22a extending perpendicularly from the body 20 and connecting to the elbow 14 having an elbow bore 14a. The elbow 14 is connected to the spigot 22 such that the join is air tight. The elbow 14 has two perpendicular sections 14b,c that may be L shaped or joined along a curve. In any event, the elbow 14 is shaped so as to extend the cavity 22a of the spigot 22 such that it is spaced from, but is parallel to, the axial bore 26.

The hollow adaptor 16 has an adaptor bore 16a and is sealed to the elbow 14 to further extend the cavity 14a vertically. The adaptor 16 has a similar top section to the body 12 in that it has an O-ring 36 and an external screw thread 38 to receive a second screw cap 40. Despite Figure 1 depicting the adaptor 16 as a separate component to the elbow 14, in alternative embodiments the adaptor 16 may be integral with the elbow and may act as an extension of the vertical component 14c.

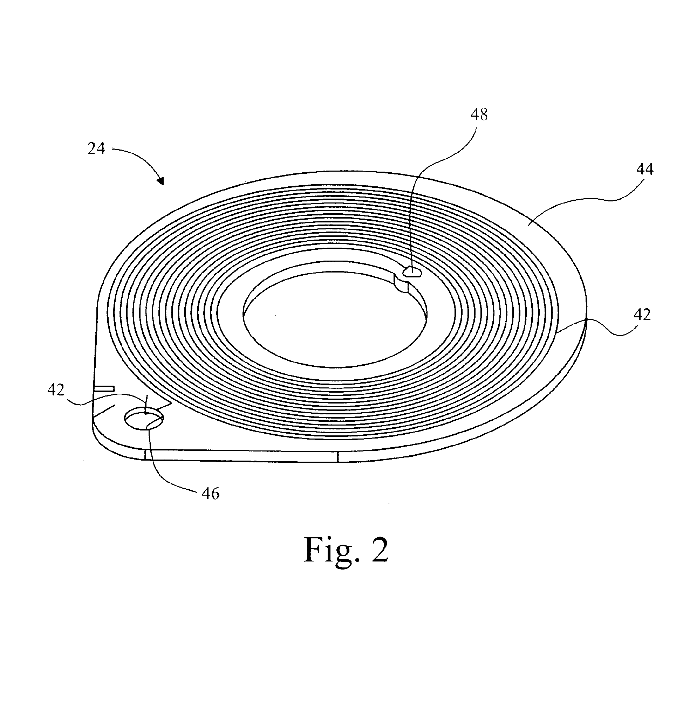

Figure 2 gives a detailed view of one particular embodiment of the electrofusion element mat 24 comprising an electrofusion element 42 embedded on either side of a fusible polymer material disc 44 that is provided with a hole 48 through which said electrofusion element 42 passes from one side of said polymer material 44 to the other. Terminal pins (not shown) pass through the two holes 46,48 contacting the electrofusion element 42, thus acting to both affix the electrofusion element mat 24 to the tapping tee 12 and allow means for energising the electrofusion element 42.

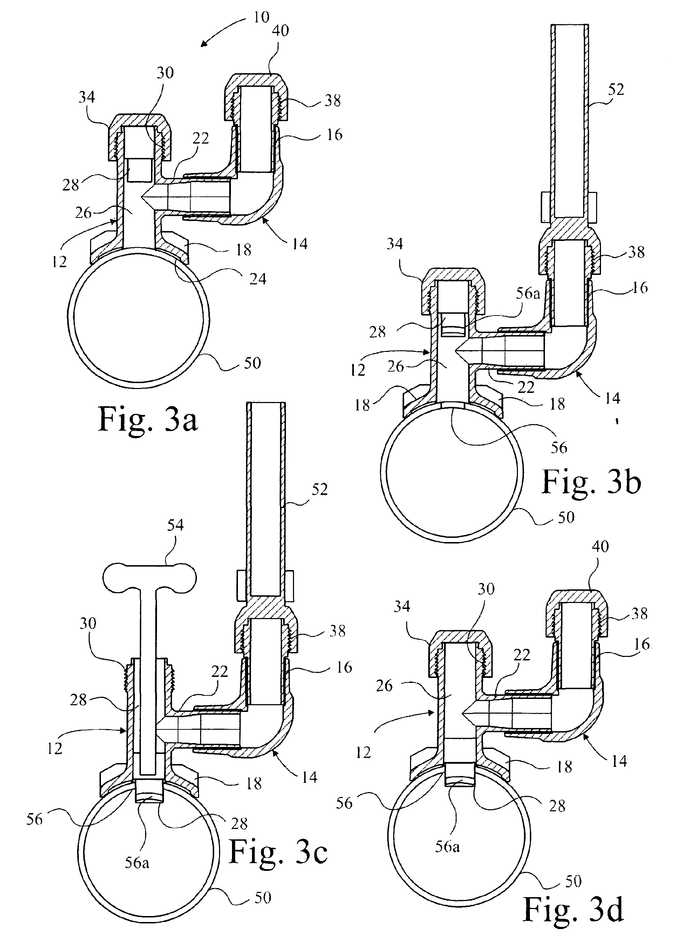

When electrically energised, the electrofusion element 42 heats up due to electrical resistance and causes the surrounding fusible polymer material 44 to melt. When allowed to cool, the fusible polymer material 44 fuses the saddle 18 of the tapping tee 12 to the mains pipe 50 (as shown in Figures 3a to d). The seal between tapping tee 12 and mains pipe must be air tight and also serves to secure the purge tee assembly 10 in place during the purging procedure.

The purging procedure is illustrated schematically in Figures 3a to d. In the first step (Figure 3a), the purge tee assembly 10 is electrofused to the mains pipe 50. Before this step can be implemented, the immediate environment around the pipe and fitting to be jointed, must be clean and dry. It is generally recommended that electrofusion takes place under a welding shelter to assist in preventing airborne dust or rain from contaminating the pipe 50 surface once prepared. The pipe 50 is then scraped to remove nominally 0.2 to 0.4 mm of its surface so that surface dirt and oxide layers do not impede the electrofusion process.

When electrofusing the purge tee assembly 10 to the mains pipe 50, the metal cutter 28 is disposed at the top of the bore 26 and is flush with the top of the body 20. The metal cutter 28 comprises a hexagonal socket (not shown) to receive a tee bar 54 (as shown in Figure 3c) which winds the metal cutter 28 up and down within the threaded bore 26. To ensure that the purge tee assembly 10 does not move during electrofusion, a top loading clamp tool is inserted into the hex socket in the metal cutter 28, which then facilitates the downward application of an appropriate load onto the purge tee assembly 10.

Once the electrofusion element 42 has been energised and the melted fusible polymer 44 allowed to cool and set, the integrity of the weld is tested by removing one of the caps 34,40 and performing a pressure test. With the purge tee assembly 10 securely welded to the desired location, the vent pipe 52 is fitted to adaptor 16. The vent pipe 52 can be connected to the adaptor 16 by a variety of means. The embodiment depicted in Figures 3b and c comprises a screw threaded vent pipe 52 that screws onto the external screw thread 38 of the adaptor 16. Further support for the vent pipe is probably desirable to avoid undesirable loads being imposed on the purge tee assembly 10. However, such additional support, as well as the true length of the vent pipe 52 is not shown in the drawings. In addition to (or instead of) vent pipe 52, other ancillary components such as pressure measuring instruments, can be connected to the threaded end 38 of the adaptor 16.

A coupon 56a is then cut out of the mains pipe 50 using the metal cutter 28 (Figure 3b). Cutting of the mains pipe 50 is done by first removing the first screw cap 34, inserting the bottom end of the tee bar 54 into the complementary hex socket of the metal cutter 28, and then rotating the tee bar 54 clockwise such that the metal cutter travels downward within the bore 26 and cuts into the mains pipe 50. The coupon 56a cut from the mains pipe 50 remains lodged within the cutter 28 thereafter, leaving a circular hole 56 in the crown of the mains pipe 50.

Once the vent pipe 52 is securely fitted, and its integrity tested, the purging process can take place. Thus, after cutting hole 56 in the pipe 50, the cutter 28 is returned to the top of the bore 26 using the tee bar 54 and the first cap 34 replaced. This opens connection between pipe 50 and vent 52, enabling venting of the contents of the pipe 50. In this respect, cutter 28 and its coupon 56a act as a valve. When purging is complete, the cutter 28 is wound down once again using the tee bar 54, into the hole 56 it created previously, effectively acting as a plug (Figure 3c). The gas source is isolated at this point, thus allowing any ancillary components such as the vent pipe 52, to be safely removed from the adaptor 16. The tee bar 54 is then disconnected from the hex socket of the cutter 28 and withdrawn from the bore 26, leaving the cutter 28 disposed in the hole 56. Finally, both screw caps 34,40 are secured over their respective external screw threads 30,38, permanently sealing the assembly 10 (Figure 3d).

The procedure described above can thus be used to purge air before the introduction of natural gas when commissioning a mains pipe, or similarly, to purge natural gas before the introduction of air when decommissioning a mains pipe.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

The following numbered statements comprise the claims of this application's parent, as originally filed, and are provided below as basis for possible future amendment to the claims of this application.
1. A purge tee assembly for purging a plastics mains pipeline comprising:
   a saddle, provided with a saddle-shaped saddle electrofusion element;
   a hollow body, integral with the saddle and provided with an axial bore and an externally screw threaded end distal to said saddle, said externally threaded end to receive a first screw cap;
   a cutter disposed within said axial bore and advancable and withdrawable therein to cut a hole in the mains pipe when the saddle is fitted thereto;
   a tubular spigot, which is integral with the hollow body and has a spigot bore in fluid connection with the axial bore of the body;
   **characterised in that**
   said spigot comprises an externally screw threaded distal outlet and a second screw cap.
2. A purge tee assembly as claimed in claim 1, wherein, between said spigot and distal outlet is a tubular elbow to turn said outlet substantially parallel said axial body.
3. A purge tee assembly as claimed in claim 2, comprising a conventional tapping tee comprising said saddle, body and spigot, a conventional elbow fitting having one outlet fused on said spigot and a cap adaptor fitted in the other outlet of the elbow, said cap adaptor comprising said distal outlet and a plain pipe section to be received in said other outlet of the elbow.
4. A purge tee assembly as claimed in claim 1, 2 or 3, in which said cutter and said axial bore are screw threaded in a complementary fashion.
5. A purge tee assembly as claimed in claim 4, wherein said cutter comprises a socket for engagement with a complementary tool.
6. A purge tee assembly as claimed in claim 5, wherein said complementary tool comprises a winding tool to translate said cutter along said axial bore.
7. A purge tee assembly as claimed in claim 5, wherein said complementary tool comprises a top loading clamp.
8. A purge tee assembly as claimed in any preceding claim, wherein said body and said distal outlet further comprise O-rings to enhance the seal made by said first and second screw caps.
9. A purge tee assembly as claimed in any preceding claim, further comprising a vent pipe for connection to said distal outlet.
10. A purge tee assembly as claimed in claim 10, wherein, when connected to said distal outlet, said vent pipe extends at least one metre vertically above said plastics pipeline.
11. A purge tee assembly as claimed in claim 9 or 10, wherein said vent pipe is metallic.
12. A purge tee assembly as claimed in claim 11, wherein said vent pipe is composed of aluminium.
13. A purge tee assembly as claimed in claim 11, wherein said vent pipe is composed of steel.
14. A purge tee assembly as claimed in any preceding claim, wherein said saddle, body and spigot are integrally moulded.
15. A purge tee assembly as claimed in claim 14, wherein said elbow is integrally moulded to said spigot.
16. A purge tee assembly as claimed in any preceding claim, in which said screw caps are made from plastics material.
17. A method of purging fluid in a plastics pipeline, using a purge tee assembly as claimed in claim 1 , said method comprising the steps:
   i) electro-fusing said purge tee assembly to said plastics pipeline;
   ii) fitting a vent pipe to said distal outlet;
   iii) translating said cutter down said axial bore and cutting a hole in said plasties pipeline;
   iv) translating said cutter upward through said axial bore such that said spigot bore is in fluid connection with said plastics pipeline;
   v) venting unwanted fluid from said plastics pipeline;
   vi) translating said cutter down said axial bore such that said cutter is disposed in said hole to temporarily, at least partially, close fluid connection between said pipeline and spigot bore;
   vii) removing said vent pipe; and
   viii) sealing said purge tee assembly by screwing said first and second screw caps onto said externally threaded end of said hollow body and said outlet respectively.
18. A method as claimed in claim 17, wherein said plastics pipeline is scraped to remove nominally 0.2 to 0.4 mm of its surface prior to executing step i).
19. A method as claimed in claim 17 or 18, when using a purge tee assembly as claimed in claim 5, wherein said cutter is translated along said axial bore by rotation of said winding tool when engaged with said socket.
20. A method as claimed in claim 17, 18 or 19, wherein said method further comprises the steps of testing the integrity of any seals of said purge tee assembly prior to step ii).
21. A method as claimed in any of claims 17 to 20, wherein said purge tee assembly is secured to said plastics pipeline by a clamp tool during step i).
22. A kit of parts comprising:
   i) a tapping tee, having a saddle, body and spigot;
   ii) an adaptor for connection to said spigot; and
   iii) seal caps for sealing connection to said body and adaptor.
23. A kit as claimed in claim 22, further comprising:
   iv) an elbow fitting for connection between said spigot and adaptor.
24. A kit as claimed in claim 22, in which said adaptor is connectible to said spigot by electrofusion of electrofusion elements on or in one of said adaptor and spigot.
25. A kit as claimed in claim 23, in which said adaptor is connectible to said elbow and said elbow is connectible to said spigot by electrofusion of electrofusion elements on or in one or more of said adaptor, elbow and spigot.
26. A kit as claimed in any of claims 22 to 25, further comprising:
   v) a vent pipe for connection to said adaptor.
27. A purge tee assembly substantially as hereinbefore described with reference to the accompanying drawings
28. A method of purging fluid in a plastics pipeline, substantially as hereinbefore described.

## Claims

1. A purge tee assembly (10) for purging a plastics mains pipeline (50) comprising:
a saddle (18), provided with a saddle-shaped electrofusion element (24);
a hollow body (20), integral with the saddle and provided with an axial bore (26) and an externally screw threaded end (30) distal to said saddle, said externally threaded end to receive a first screw cap (34);
a cutter (28) disposed within said axial bore and advancable and withdrawable therein to cut a hole in the mains pipe when the saddle is fitted thereto;
a tubular spigot (22), which is integral with the hollow body and has a spigot bore (22a) in fluid connection with the axial bore of the body;
**characterised in that**
said purge tee assembly (10) has an externally screw threaded distal outlet substantially parallel said axial body and in fluid connection with said spigot (22) and a second screw cap (40).

2. A purge tee assembly as claimed in claim 1, wherein, between said spigot (22) and distal outlet is a tubular elbow (14) to turn said outlet substantially parallel said axial body.

3. A purge tee assembly as claimed in claim 2, comprising a tapping tee comprising said saddle (18), body (20) and spigot (22), an elbow fitting having one outlet fused on said spigot and a cap adaptor (16) fitted in the other outlet of the elbow, said cap adaptor comprising said distal outlet and a plain pipe section to be received in said other outlet of the elbow.

4. A purge tee assembly as claimed in claim 1, 2 or 3, in which said cutter (28) and said axial bore (26) are screw threaded in a complementary fashion.

5. A purge tee assembly as claimed in claim 4, wherein said cutter comprises a socket for engagement with a complementary tool,
the complementary tool preferably comprising a winding tool to translate said cutter along said axial bore or a top loading clamp.

6. A purge tee assembly as claimed in any preceding claim, wherein said body and said distal outlet further comprise O-rings (32) to enhance the seal made by said first and second screw caps (34,40).

7. A purge tee assembly as claimed in any preceding claim, further comprising a vent pipe (52) for connection to said distal outlet, preferably wherein, when connected to said distal outlet, said vent pipe extends at least one metre vertically above said plastics pipeline; and/or
wherein said vent pipe is metallic, being preferably composed of aluminium or steel.

8. A purge tee assembly as claimed in any preceding claim, wherein said saddle (18), body (20) and spigot (22) are integrally moulded and, preferably,
wherein said elbow (14) is integrally moulded to said spigot.

9. A purge tee assembly as claimed in any preceding claim, in which said screw caps (34,40) are made from plastics material.

10. A method of purging fluid in a plastics pipeline, using a purge tee assembly as claimed in claim 1, said method comprising the steps:
i) electro-fusing said purge tee assembly to said plastics pipeline;
ii) fitting a vent pipe (52) to said distal outlet;
iii) translating said cutter down said axial bore and cutting a hole in said plastics pipeline;
iv) translating said cutter upward through said axial bore such that said spigot bore is in fluid connection with said plastics pipeline;
v) venting unwanted fluid from said plastics pipeline;
vi) translating said cutter down said axial bore such that said cutter is disposed in said hole to temporarily, at least partially, close fluid connection between said pipeline and spigot bore;
vii) removing said vent pipe; and
viii) sealing said purge tee assembly by screwing said first and second screw caps onto said externally threaded end of said hollow body and said outlet respectively.

11. A method as claimed in claim 10, wherein said plastics pipeline is scraped to remove nominally 0.2 to 0.4 mm of its surface prior to executing step i); and/or
when using a purge tee assembly as claimed in claim 5, wherein said cutter is translated along said axial bore by rotation of said winding tool when engaged with said socket; and/or
wherein said method further comprises the steps of testing the integrity of any seals of said purge tee assembly prior to step ii); and/or
wherein said purge tee assembly is secured to said plastics pipeline by a clamp tool during step i).

12. A kit of parts comprising:
i) the purge tee assembly of claim 1 comprising a tapping tee, having a saddle (18), body (20) and spigot (22);
ii) an adaptor for connection to said spigot; and
iii) seal caps for sealing connection to said body and adaptor.

13. A kit as claimed in claim 12, further comprising:
iv) an elbow fitting (14) for connection between said spigot and adaptor, and preferably in which said adaptor is connectible to said elbow and said elbow is connectible to said spigot by electrofusion of electrofusion elements on or in one or more of said adaptor, elbow and spigot.

14. A kit as claimed in claim 12, in which said adaptor is connectible to said spigot by electrofusion of electrofusion elements on or in one of said adaptor and spigot.

15. A kit as claimed in any of claims 12 to 14, further comprising:
v) a vent pipe (52) for connection to said adaptor.
